# EUROPÄISCHE PATENTANMELDUNG

(11) **EP 3 225 860 A1**
(43) Veröffentlichungstag der Anmeldung: **04.10.2017**
(21) Anmeldenummer: 16163208.8
(22) Anmeldetag: 31.03.2016
(51) Int. Cl.: F16B 47/00, A47K 1/08, A47G 1/17

(54) **BEFESTIGER**

(71) Anmelder: Glabete GmbH, 73061 Ebersbach (DE)
(72) Erfinder: Hardegen, Markus, 73732 Esslingen (DE)
(74) Vertreter: Ruckh, Rainer Gerhard

(57) **Zusammenfassung**

Die Erfindung betrifft einen Befestiger (1) mit einem Grundkörper (2), welcher eine Befestigungsseite (3) zur Befestigung an einem Gegenstand (4) aufweist. An der der Befestigungsseite (3) gegenüberliegenden Rückseite (6) des Grundkörpers (2) ist wenigstens eine Aufnahme für einen aeroben Klebstoff (8) ausgebildet, welche mit einem verformbaren Deckel (9) verschlossen ist. Durch eine durch Druckeinwirkung bedingte Verformung des Deckels (9) wird aerober Klebstoff (8) aus der Aufnahme über den Grundkörper (2) durch in axialer Richtung durchsetzende Bohrungen (10, 14) zur Befestigungsseite (3) geführt. Dort kommt der aerobe Klebstoff (8) in Kontakt mit einem das Aushärten des aeroben Klebstoffs (8) beschleunigenden Reaktionsbeschleuniger (12), welcher in an der Befestigungsseite (3) ausmündenden Reservoirs (11) gelagert ist oder an diesen austritt.

## Beschreibung

Die Erfindung betrifft einen Befestiger.

Eine einen derartigen Befestiger bildende Vorrichtung ist aus der WO 2014/166773 A1 bekannt.

Diese Vorrichtung dient zur Ausbildung einer Klebeverbindung zwischen einem Gegenstand und einer Auflage. Der Gegenstand weist ein Reservoir mit einem Klebemittel auf, welches mit einer eine Sollbruchstelle aufweisenden Wand an eine Kontaktfläche angrenzt. Der Gegenstand weist einen Knopf mit einem diesem zugeordneten Durchstoßmittel auf, wobei durch Betätigen des Knopfs das Durchstoßmittel einen Durchbruch in der Wand des Reservoirs generiert, durch welchen Klebemittel aus dem Reservoir auf die Kontaktfläche geleitet ist und eine Klebeschicht zur Befestigung des Gegenstands auf der Auflage ausbildet.

Bei dieser Vorrichtung wird das zur Fixierung an der Auflage benötigte Klebemittel im Gegenstand selbst gelagert. Die Freisetzung des Klebemittels erfolgt auf einfache Weise auf Knopfdruck, das heißt durch Betätigen eines am oder im Gegenstand selbst vorgesehenen Knopfs. Auf diesen Knopfdruck strömt das Klebemittel aus dem Reservoir auf die Kontaktfläche und bildet dort eine Klebeschicht, mittels derer der Gegenstand auf der Auflage befestigt werden kann.

Vorteilhaft hierbei ist, dass die Klebeverbindung schnell hergestellt werden kann. Nachteilig ist jedoch, dass in der Vorrichtung ein Durchstoßmittel integriert werden muss, mit dem bei Betätigen des Knopfs die Wand des Reservoirs durchgestoßen werden muss.

Diese Integration des Durchstoßmittels erfordert einen unerwünscht hohen Konstruktionsaufwand, zumal das Durchstoßmittel exakt zur Wand platziert werden muss, um ein reproduzierbares Durchstoßen dieser Wand zu gewährleisten. Dies erfordert eine exakte, toleranzarme Montage und dadurch bedingt hohe Herstellkosten bei der Festigung der Vorrichtung.

Der Erfindung liegt die Aufgabe zugrunde, einen Befestiger der eingangs genannten Art auszubilden, welcher bei hoher Funktionalität und Funktionssicherheit einfach handhabbar und flexibel einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen Befestiger mit einem Grundkörper, welcher eine Befestigungsseite zur Befestigung an einem Gegenstand aufweist. An der Befestigungsseite gegenüberliegenden Rückseite des Grundkörpers ist wenigstens eine Aufnahme für einen aeroben Klebstoff ausgebildet, welche mit einem verformbaren Deckel verschlossen ist. Durch eine durch Druckeinwirkung bedingte Verformung des Deckels wird aerober Klebstoff aus der Aufnahme über den Grundkörper durch in axialer Richtung durchsetzende Bohrungen zur Befestigungsseite geführt und kommt dort in Kontakt mit einem das Aushärten des aeroben Klebstoffs beschleunigenden Reaktionsbeschleuniger, welcher in an der Befestigungsseite ausmündenden Reservoirs gelagert ist oder an diesen austritt.

Der erfindungsgemäße Befestiger weist bei einfacher Handhabbarkeit eine hohe Funktionalität auf. Wesentlich ist, dass der Befestiger eine integrierte Einheit bildet, in dem sämtliche Komponenten zur Herstellung einer stabilen und dauerhaften Klebeverbindung mit dem Gegenstand gelagert sind. Dabei ist vorteilhaft der Reaktionsbeschleuniger dem Befestiger bereits im Herstellungsprozess zugefügt. Prinzipiell kann der Reaktionsbeschleuniger dem Befestiger auch unmittelbar von dessen Gebrauch zugefügt werden. Zur Herstellung der Klebeverbindung braucht lediglich der Befestiger mit der Befestigungsseite auf den Gegenstand aufgesetzt werden und dann auf den Deckel des Befestigers gedrückt werden. Durch das Aufdrücken auf den Deckel und die dadurch bewirkte Verformung des Deckels wird der aerobe Klebstoff selbsttätig zur Befestigungsseite geführt, bildet dort eine Klebeschicht und kommt dort in Kontakt mit dem Reaktionsbeschleuniger, so dass die Klebeschicht schnell und in ihrem gesamten Volumen aushärten kann.

Ein wesentlicher Vorteil besteht hierbei darin, dass der Befestiger, abgesehen von dem verformbaren Deckel, keinerlei bewegte Teile aufweist, um den Transport des aeroben Klebstoffs zur Befestigungsseite zu ermöglichen. Der Befestiger weist somit einen konstruktiv einfachen und robusten Aufbau auf.

Gemäß einer vorteilhaften Ausführungsform der Erfindung ist der aerobe Klebstoff von silanen Polymeren gebildet.

Weiter vorteilhaft ist der Reaktionsbeschleuniger von einem hydrophilen Stoff und/oder Feuchtigkeit gebildet.

Der hydrophile Stoff beziehungsweise Feuchtigkeit enthaltende hydrophile Stoff kann in fester, flüssiger oder auch gelförmiger Form vorliegen.

Dabei ist der hydrophile Stoff von Baumwolle, Cellulose, einem Faserverbundwerkstoff, einem Salz, einem Mineral, einem Harz, Glycerin oder Propylenglykol gebildet.

Weiterhin ist die Feuchtigkeit von Wasser oder Isopropanol gebildet, welche in flüssiger Form oder in Gelform vorliegt.

Wesentlich bei dem erfindungsgemäßen Befestiger ist, dass der Reaktionsbeschleuniger nicht vollflächig über die gesamte Befestigungsseite verteilt ist. Vielmehr ist an der Befestigungsseite ausmündend eine diskrete Anordnung von Reservoirs vorgesehen, das heißt die Reservoirs sind in vorgegebenen Abständen zueinander angeordnet. Aus diesen Reservoirs wird dem aeroben Klebstoff genau die für die Aushärtung benötigte Menge an Reaktionsbeschleuniger zugeführt, so dass der Aushärtungsprozess gleichförmig im gesamten Volumen der Klebstoffschicht erfolgen kann, wodurch eine sehr stabile Verbindung zwischen Befestiger und Gegenstand erhalten wird. Die kontrollierte Reaktionsbeschleuniger-Zufuhr zu dem aeroben Klebstoff ist dadurch gegeben, dass in den Reservoirs jeweils lokal ein Überschuss an Füllmittel vorhanden ist. Durch den Kontakt von aerobem Klebstoff und Füllmittel an den Öffnungen der Reservoirs wird dem aeroben Klebstoff selbsttätig Füllmittel zugeführt, wobei durch die begrenzten Querschnitte und die begrenzte Anzahl von Reservoirs nicht nur eine mengenmäßige sondern auch zeitliche Dosierung der Zufuhr von Füllmittel zum aeroben Klebstoff gegeben ist.

Der aerobe Klebstoff an der Befestigungsseite des Befestigers ist dann diffusionsdicht, das heißt flüssigkeits- und gasdicht gekapselt, wenn dieser auf den zu fixierenden Gegenstand aufgesetzt ist. Damit erfolgt der Aushärtungsprozess des aeroben Klebstoffs unabhängig von Umgebungsbedingungen wie zum Beispiel Luftfeuchtigkeit der Umgebungsluft.

Prinzipiell ist es ausreichend, wenn der Deckel des Befestigers plastisch verformbar ist. Besonders vorteilhaft besteht der Deckel von einer Folie oder einem elastisch verformbaren Formteil.

Besonders vorteilhaft ist der Befestiger ein Adapter, mittels dessen ein Objekt an einem Gegenstand befestigbar ist.

Beispielsweise kann der Adapter an einer den Gegenstand bildenden Wand eines Raumes eines Gebäudes, beispielsweise eines Badezimmers, fixiert werden. An dem Adapter können dann Objekte wie zum Beispiel Gelenke, Haken und dergleichen befestigt werden, die wiederum Einrichtungsgegenstände und dergleichen tragen können.

In diesem Fall kann vorteilhaft der Deckel Bestandteil des Objekts sein, wodurch die Anzahl der Einzelteile des Gesamtsystems verringert werden kann.

Gemäß einer ersten Variante ist in den Reservoirs als Reaktionsbeschleuniger ein Feuchtigkeit enthaltender hydrophiler Stoff vorhanden.

Der hydrophile Stoff mit der enthaltenen Feuchtigkeit bildet damit einen gebrauchsfertigen Reaktionsbeschleuniger, mit dem der Aushärtungsprozess des aeroben Klebstoffs beschleunigt werden kann.

Gemäß einer zweiten Variante ist in den Reservoirs als Reaktionsbeschleuniger ein hydrophiler Stoff, der keine Feuchtigkeit enthält, vorhanden, wobei dem hydrophilen Stoff nachträglich Feuchtigkeit zugeführt wird.

In diesem Fall ist der hydrophile Stoff ohne Feuchtigkeit in den Reservoirs eingelagert, insbesondere eingepresst.

Ein gebrauchsfertiger Reaktionsbeschleuniger zum Aushärten des aeroben Klebstoffs wird dadurch erhalten, dass Feuchtigkeit nachträglich in die Reservoirs mit dem dort enthaltenen hydrophilen Stoff zugegeben wird. Dies erfolgt bevor der Befestiger auf den Gegenstand aufgesetzt und bevor Druck auf den Deckel ausgeübt wird.

Gemäß einer ersten konstruktiven Variante sind die Reservoirs von Ausnehmungen im Grundkörper gebildet, welche nur eine Öffnung an der Befestigungsseite aufweisen.

Dies bedeutet, dass die Reservoirs nur an Befestigungsseiten ausmünden und ansonsten allseitig vom Grundkörper umschlossen sind. In diesem Fall wirkt sich eine Ausübung von Druck auf den Deckel nicht auf den in den Reservoirs enthaltenen Reaktionsbeschleuniger aus, das heißt der Reaktionsbeschleuniger bleibt auch bei Ausüben von Druck in den Reservoirs. Daher kommt der aerobe Klebstoff dadurch in Kontakt mit dem Reaktionsbeschleuniger, dass bei Druckausübung auf den Deckel der aerobe Klebstoff durch die Bohrungen zur Befestigungsseite gelangt und dabei zu dem in den Reservoirs gelagerten Reaktionsbeschleuniger gelangt.

Gemäß einer zweiten konstruktiven Variante sind die Reservoirs von weiteren, den Grundkörper in axialer Richtung durchsetzenden Bohrungen gebildet. Diesen Bohrungen ist wenigstens eine weitere Aufnahme an der Rückseite des Grundkörpers zugeordnet, wobei in dieser Aufnahme der Reaktionsbeschleuniger gelagert ist und wobei diese Aufnahme von der Aufnahme für den aeroben Klebstoff abgetrennt ist.

In diesem Fall wird bei Druckausübung auf den Deckel sowohl der aerobe Klebstoff über die Bohrungen als auch der Reaktionsbeschleuniger über die weiteren Bohrungen zur Befestigungsseite gefördert.

Gemäß einer vorteilhaften Weiterbildung sind der aerobe Klebstoff und/oder der Reaktionsbeschleuniger jeweils in einer Umhüllung in der jeweiligen Aufnahme gelagert. Mittels eines Durchstoßdorne aufweisenden Werkzeugs ist durch Führen der Durchstoßdorne durch die Bohrungen die oder jede Umhüllung aufstoßbar.

Der aerobe Klebstoff beziehungsweise der Reaktionsbeschleuniger sind in der Umhüllung sicher gegen externe Umwelteinflüsse geschützt. Der Befestiger mit dem dort integrierten aeroben Klebstoff und Reaktionsbeschleuniger kann so über lange Zeiträume gelagert werden. Das Werkzeug zum Aufbrechen der Umhüllungen stellt ein einfach handhabbares, kostengünstig herstellbares Zusatzteil dar, durch dessen Betätigung auf einfach Weise der aerobe Klebstoff beziehungsweise der Reaktionsbeschleuniger aus seiner Umhüllung austreten kann und so der Befestiger zur Befestigung am Gegenstand bereit ist.

Alternativ kann eine langzeitstabile Lagerung des aeroben Klebstoffs und des Reaktionsbeschleunigers im Befestiger dadurch erhalten werden, dass die Befestigungsseite mit einem Verschlussmittel lösbar abschließbar ist.

Gemäß einer weiteren Alternative ist der Befestiger in einer diffusionsdichten Verpackung lagerbar.

Gemäß einer vorteilhaften Weiterbildung der Erfindung schließt an den äußeren Rand der Befestigungsseite ein Überlaufkanal an, welcher sich über den gesamten Umfang der Befestigungsseite erstreckt.

Dabei ist der Überlaufkanal an seiner Außenseite von einem Randsegment des Grundkörpers begrenzt, welcher über die Befestigungsseite hervorsteht.

Der Überlaufkanal verhindert bei Auftragen des aeroben Klebstoffs auf die Befestigungsseite, dass der aerobe Klebstoff über den Rand des Grundkörpers auf dessen äußere Mantelfläche überläuft.

Weiter vorteilhaft ist auf die freiliegende Stirnseite des Randsegments ein Klebemittel aufgebracht.

Insbesondere ist das Klebemittel ein Klebeband.

Das Klebemittel bildet ein Mittel zur Vorfixierung des Befestigers, das den Befestiger am Gegenstand sicher festhält, bis der aerobe Klebstoff ausgehärtet ist und die bleibende Fixierung des Befestigers am Gegenstand übernimmt.

Die Erfindung wird im Folgenden anhand der Zeichnungen erläutert. Es zeigen:
- Figur 1:: Erstes Ausführungsbeispiel des erfindungsgemäßen Befestigers a) vor Druckausübung auf den Deckel des Befestigers b) nach Druckausübung auf den Deckel des Befestigers
- Figur 2:: Zweites Ausführungsbeispiel des erfindungsgemäßen Befestigers a) vor Druckausübung auf den Deckel des Befestigers b) nach Druckausübung auf den Deckel des Befestigers
- Figur 3:: Variante des ersten Ausführungsbeispiels des Befestigers gemäß Figur 1.
- Figur 4:: Erste konstruktive Variante des erfindungsgemäßen Befestigers.
- Figur 5:: Zweite konstruktive Variante des erfindungsgemäßen Befestigers.
- Figur 6:: Dritte konstruktive Variante des erfindungsgemäßen Befestigers.
- Figur 7:: Vierte konstruktive Variante des erfindungsgemäßen Befestigers.

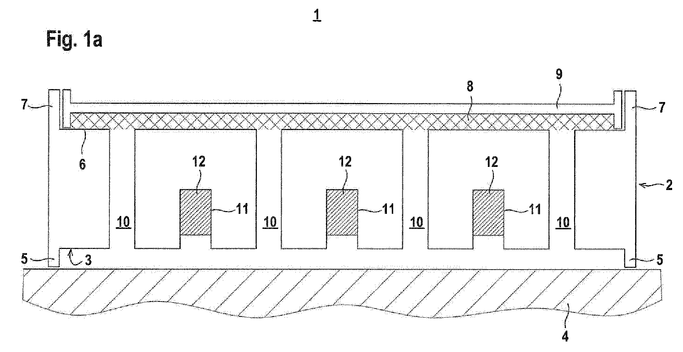

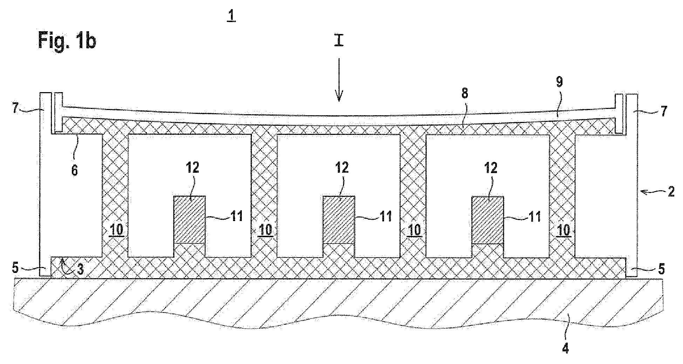

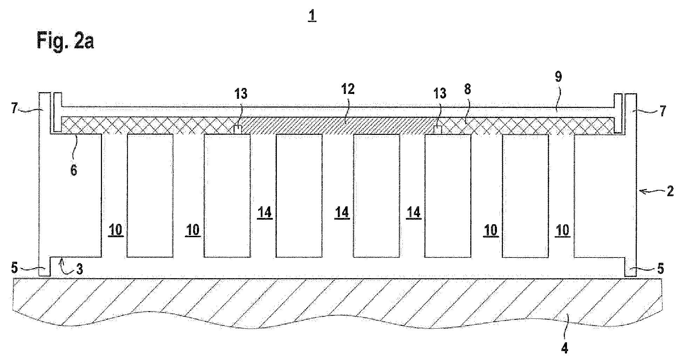

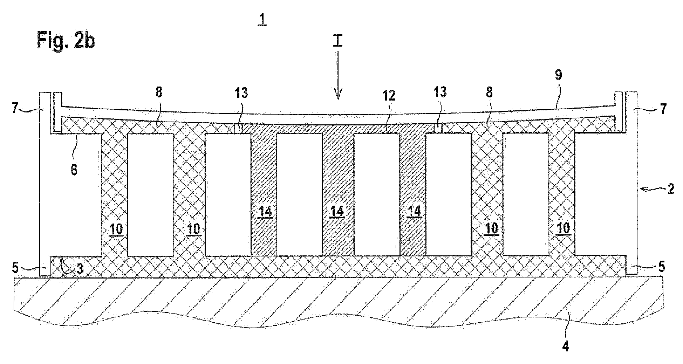

Die Figuren 1a, b und 2a, b zeigen zwei Ausführungsbeispiele des erfindungsgemäßen Befestigers 1, der insbesondere als Adapter ausgebildet sein kann. Der Befestiger 1 weist einen Grundkörper 2 aus diffusionsdichtem, das heißt gas- und flüssigkeitsdichtem Material auf. Der Grundkörper 2 besteht aus einem metallischen Werkstoff wie zum Beispiel Aluminium, Zink-Druckguß oder einem Kunststoff.

Die vordere Stirnseite des Grundkörpers 2 bildet eine Befestigungsseite 3 mit der der Befestiger 1 an einem Gegenstand 4 wie zum Beispiel einer Wand eines Gebäudes befestigt wird. Die Befestigungsseite 3 bildet eine im Wesentlichen ebene Fläche. Der vordere Rand der Außenwand des Grundkörpers 2 bildet ein Randsegment 5 aus, das geringfügig über die Befestigungsseite 3 hervorsteht. Die Stirnseite des Randsegments 5 bildet eine ebene Auflagefläche aus, mit der der Befestiger 1 auf den Gegenstand 4 aufgesetzt werden kann.

Bei der Ausführungsform gemäß den Figuren 1a und 1b bildet die der Befestigungsseite 3 gegenüberliegende Rückseite 6 des Grundkörpers 2 mit einem über diese hervorstehenden weiteren Randsegment 7 eine Aufnahme für einen aeroben Klebstoff 8 aus. Der aerobe Klebstoff 8 ist, wie bei allen anderen Ausführungsbeispielen, von einem silanen Polymer gebildet. Der Bereich der Aufnahme ist mit einem verformbaren Deckel 9 verschlossen. Im vorliegenden Fall besteht der Deckel 9 aus einem elastisch verformbaren Formteil, das aus einem Elastomer oder einem Kunststoff besteht. Alternativ kann der Deckel 9 auch aus einer elastisch verformbaren Folie bestehen.

Wie die Figuren 1a, 1b zeigen, ist der Grundkörper 2 von einer diskreten Anordnung von identisch ausgebildeten Bohrungen 10 durchsetzt. Die Bohrungen 10 weisen vorzugsweise jeweils einen kreisförmigen Querschnitt auf und sind in vorzugsweise regelmäßigen Abständen über den Grundkörper 2 verteilt. Jede Bohrung 10 mündet sowohl an der Rückseite 6 als auch an der Befestigungsseite 3 des Grundkörper 2 aus.

Weiterhin sind im Grundkörper 2 identisch ausgebildete Reservoirs 11 vorgesehen, die nur an der Befestigungsseite 3 ausmünden. Die Reservoirs 11 sind in Form von hohlzylindrischen Ausnehmungen ausgebildet, die vorzugsweise in regelmäßigen Abschnitten über den Grundkörper 2 verteilt sind. Die Längsachsen der Reservoirs 11 verlaufen parallel zu den Längsachsen der Bohrungen 10 und senkrecht zur Befestigungsseite 3 und zur Rückseite 6 des Grundkörpers 2.

In den Reservoirs 11 befindet sich ein Reaktionsbeschleuniger 12. Der Reaktionsbeschleuniger 12 weist einen hydrophilen Stoff auf. Vorteilhaft ist der hydrophile Stoff von Baumwolle, Cellulose, einem Faserverbundwerkstoff, einem Salz, einem Mineral, einem Harz oder Glycerin gebildet.

Der hydrophile Stoff enthält weiterhin Feuchtigkeit, insbesondere Wasser oder Isopropanol.

Im vorliegenden Fall ist der Reaktionsbeschleuniger 12, bestehend aus hydrophilen Stoff und Feuchtigkeit, in den Reservoirs 11 eingelagert, insbesondere eingepresst. Der Reaktionsbeschleuniger 12 liegt dabei in fester Form oder in Gelform vor. Alternativ kann in den Reservoirs 11 hydrophiler Stoff ohne Feuchtigkeit enthalten sein. Dann kann den Reservoirs 11 vor Aufsetzen des Befestigers 1 auf den Gegenstand 4 nachträglich Feuchtigkeit zugeführt werden.

Figur 1a zeigt den Befestiger 1 in einer Anfangsposition, in der dieser zwar auf den Gegenstand 4 aufgesetzt ist, jedoch noch kein Druck auf den Deckel 9 ausgeübt ist, so dass der Deckel 9 noch nicht verformt ist. Demzufolge befindet sich der aerobe Klebstoff 8 noch in seiner ursprünglichen Lagerposition im Bereich der Aufnahme zwischen Deckel 9 und Rückseite 6 des Grundkörpers 2.

Figur 1b zeigt die Situation, wenn durch Ausüben von Druck (dargestellt durch den Pfeil I) der Deckel 9 verformt wird. Dadurch wird aerober Klebstoff 8 durch die Bohrungen 10 gedrückt und tritt an diesen an der Befestigungsseite 3 aus, so dass zwischen Befestigungsseite 3 und Gegenstand 4 eine Klebeschicht gebildet wird. Die Klebeschicht kommt in Kontakt mit dem in den Reservoirs 11 enthaltenen Reaktionsbeschleuniger 12. Die Klebeschicht entzieht dem Reaktionsbeschleuniger 12 dosiert Feuchtigkeit, so dass die Klebeschicht in ihrem gesamten Volumen schnell aushärten kann. Da die Klebeschicht diffusionsdicht durch den Grundkörper 2 gekapselt ist, kann die Klebeschicht völlig unabhängig von Umgebungseinflüssen aushärten.

Die Ausführungsform der Figuren 1a, 1b kann auch dahingehend abgewandelt sein, dass die Reservoirs 11 zunächst leer sind und erst vor Gebrauch des Befestigers 1 mit Feuchtigkeit, insbesondere Wasser oder Isopropanol befüllt werden. Die Ausführungsform der Figuren 2a, 2b unterscheidet sich von der Ausführungsform der Figuren 1a, 1b dadurch, der Bereich der Aufnahme zwischen der Rückseite 6 des Grundkörpers 2 und dem Deckel 9 in mehrere, insbesondere durch Wandelemente 13 getrennte Bereiche segmentiert ist. In ersten Bereichen der Aufnahme ist der aerobe Klebstoff 8 gelagert, in wenigstens einem zweiten Bereich ist der Reaktionsbeschleuniger 12 gelagert, wie Figur 2a zeigt. Entsprechend dem Ausführungsbeispiel von Figur 1a sind in den Bereichen mit aeroben Klebstoff 8 Bohrungen 10 im Grundkörper 2 vorgesehen, die diesen in axialer Richtung durchsetzen. Anders als bei dem Ausführungsbeispiel gemäß Figur 1a sind bei der Ausführungsform gemäß Figur 2a im Bereich des Reaktionsbeschleunigers 12 weitere Bohrungen 14 vorgesehen, welche den Grundkörper 2 in axialer Richtung durchsetzen. Die weiteren Bohrungen 14 sind identisch ausgebildet und verlaufen in Abschnitt parallel zueinander und auch parallel zu den Bohrungen 10. Im vorliegenden Fall weisen die Bohrungen 10 und die weiteren Bohrungen 14 identische Geometrien auf, was jedoch nicht zwingend der Fall sein muss.

Bei Druckausübung auf den Deckel 9 (veranschaulicht durch den Pfeil I) verformt sich der Deckel 9, wodurch, wie in Figur 2b dargestellt, aerober Klebstoff 8 durch die Bohrungen 10 geführt ist und wieder eine Klebeschicht zwischen Befestigungsseite 3 und Gegenstand 4 bildet. Gleichzeitig wird durch die Verformung des Deckels 9 Reaktionsbeschleuniger 12 durch die weiteren Bohrungen 14 gefördert. Damit kann die Klebeschicht zwischen Befestigungsseite 3 und Gegenstand 4 mit dem Reaktionsbeschleuniger 12 in Kontakt kommen und im gesamten Volumen aushärten.

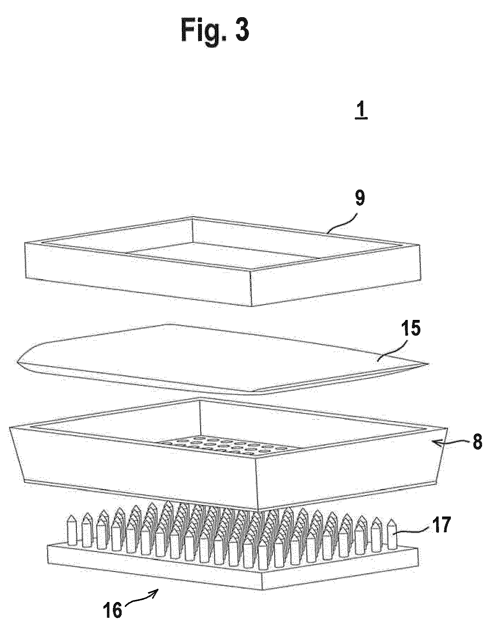

Figur 3 zeigt eine Variante der Ausführungsform der Figuren 1a, 1b. In diesem Fall ist der aerobe Klebstoff 8 in einer Umhüllung 15 gelagert. Diese Umhüllung 15 mit dem aeroben Klebstoff 8 wird zwischen dem Grundkörper 2 und dem verformbaren Deckel 9 gelegt. Die Reservoirs 11 mit Reaktionsbeschleuniger 12 sind in Figur 3 nicht separat dargestellt.

Wie Figur 3 weiter zeigt, ist dem Befestiger 1 ein Werkzeug 16 angeordnet, das eine Anordnung von Durchstoßdornen 17 aufweist, wobei deren Anordnung der Anordnung der Bohrungen 10 im Grundkörper 2 entspricht.

Vor Aufsetzen des Befestigers 1 auf den Gegenstand 4 wird das Werkzeug 16 gegen die Befestigungsseite 3 des Befestigers 1 geführt, dann werden die Durchstoßdorne 17 in die Bohrungen 10 eingeführt und die Umhüllung 15 aufgestoßen, so dass dann der aerobe Klebstoff 8 bei Druckausübung auf den Knopf durch die Bohrungen 10 zur Befestigungsseite 3 gelangen kann.

Eine entsprechende Ausbildung ist auch für den Befestiger 1 gemäß den Figuren 2a, 2b möglich. In diesem Fall sind der aerobe Klebstoff 8 und der Reaktionsbeschleuniger 12 in separaten Umhüllungen 15 gelagert. Dann ist das Werkzeug 16 so mit Durchstoßdornen 17 versehen, dass diese sowohl durch die Bohrungen 10 als auch durch die weiteren Bohrungen 14 geführt sind, so dass mit diesen die Umhüllungen 15 für den aeroben Klebstoff 8 aufgestoßen werden.

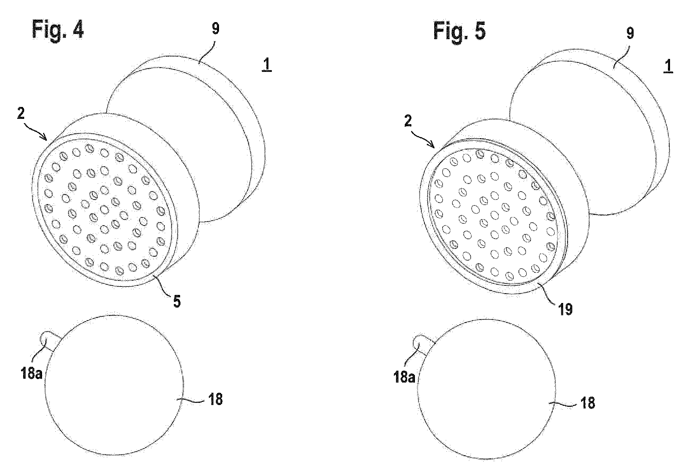

Figur 4 zeigt eine erste konstruktive Bauform für einen Befestiger 1 gemäß den Figuren 1 oder 2. Der Grundkörper 2 ist von einem kreisscheibenförmigen diffusionsdichten Massivteil gebildet. Der Deckel 9 ist in seiner Geometrie an den Grundkörper 2 angepasst. Auf das über die Befestigungsseite 3 hervorstehende Randsegment 7 kann ein Verschlussmittel 18 in Form einer aus diffusionsdichtem Material, insbesondere Kunststoff, bestehenden Folie fixiert werden, wobei das Verschlussmittel 18 hierzu eine Klebeschicht aufweist. Das Verschlussmittel 18 kann so auf dem Randsegment 5 des Befestigers 1 fixiert werden. Mit diesem Verschlussmittel 18 sind der aerobe Klebstoff 8 und der Reaktionsbeschleuniger 12 im Grundkörper 2 gegen Umwelteinflüsse geschützt. Wie Figur 4 zeigt, weist die das Verschlussmittel 18 bildende Folie ein Griffsegment 18a auf. Damit kann das Verschlussmittel 18 vor Gebrauch des Befestigers 1 von der Befestigungsseite 3 leicht abgenommen werden.

Figur 5 zeigt eine weitere Ausführungsform des Befestigers 1. Dieser Befestiger 1 unterscheidet sich von der Ausführungsform der Figur 4 nur dadurch, dass auf die Stirnseite des über die Befestigungsseite 3 hervorstehenden Randsegments 7 des Grundkörpers 2 ein Klebemittel in Form eines doppelseitigen Klebebandes 19 aufgebracht ist. Das Klebeband 19 dient als Mittel zur Vorfixierung des Befestigers 1 am Gegenstand 4. In diesem Fall braucht das Verschlussmittel 18 selbst keine Klebeschicht aufweisen.

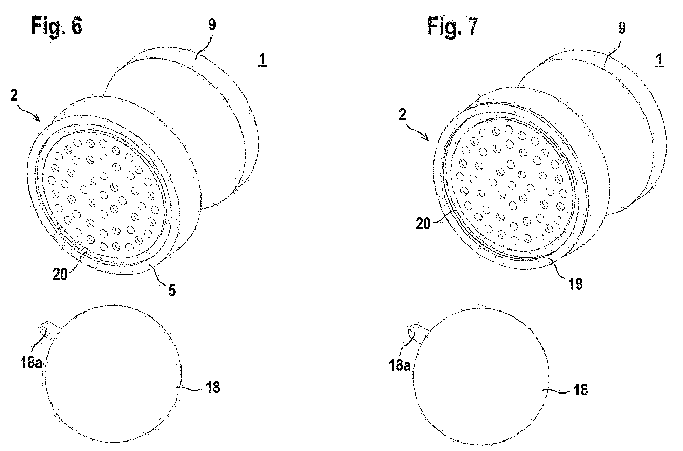

Figur 6 zeigt eine weitere Ausführungsform des Befestigers 1. Dieser Befestiger 1 unterscheidet sich von der Ausführungsform der Figur 4 nur dadurch, dass zwischen dem Rand der Befestigungsseite 3 und dem Randsegment 7 des Grundkörpers 2 ein Überlaufkanal 20 vorgesehen ist. Der Überlaufkanal 20 bildet eine Vertiefung aus, die sich mit konstantem Querschnitt entlang des gesamten Umfangs der Befestigungsseite 3 erstreckt. Der Überlaufkanal 20 verhindert ein Überlaufen des aeroben Klebstoffs 8 über das Randsegment 7.

Die Ausführungsform des Befestigers 1 gemäß Figur 7 stellt eine Kombination der Ausführungsformen der Figuren 5 und 6 dar, das heißt der Befestiger 1 gemäß Figur 7 weist sowohl ein Klebeband 19 auf dem Randsegment 7 des Grundkörpers 2 als auch einen Überlaufkanal 20 auf.

### Bezugszeichenliste

- (1): Befestiger
- (2): Grundkörper
- (3): Befestigungsseite
- (4): Gegenstand
- (5): Randsegment
- (6): Rückseite
- (7): Randsegment
- (8): aerober Klebstoff
- (9): Deckel
- (10): Bohrung
- (11): Reservoir
- (12): Reaktionsbeschleuniger
- (13): Wandelement
- (14): Bohrung
- (15): Umhüllung
- (16): Werkzeug
- (17): Durchstoßdorn
- (18): Verschlussmittel
- (18a): Griffsegment
- (19): Klebeband
- (20): Überlaufkanal

## Patentansprüche

1. Befestiger (1) mit einem Grundkörper (2), welcher eine Befestigungsseite (3) zur Befestigung an einem Gegenstand (4) aufweist, wobei an der der Befestigungsseite (3) gegenüberliegenden Rückseite (6) des Grundkörpers (2) wenigstens eine Aufnahme für einen aeroben Klebstoff (8) ausgebildet ist, welche mit einem verformbaren Deckel (9) verschlossen ist, wobei durch eine bei Druckeinwirkung bedingte Verformung des Deckels (9) aerober Klebstoff (8) aus der Aufnahme über den Grundkörper (2) durch in axialer Richtung durchsetzende Bohrungen (10) zur Befestigungsseite (3) geführt ist und dort in Kontakt mit einem das Aushärten des aeroben Klebstoffs (8) beschleunigenden Reaktionsbeschleuniger (12) kommt, welcher in an der Befestigungsseite (3) ausmündenden Reservoirs (11) gelagert ist oder an diesen austritt.

2. Befestiger nach Anspruch 1, **dadurch gekennzeichnet, dass** der aerobe Klebstoff (8) von silanen Polymeren oder von Polyurethan gebildet ist.

3. Befestiger nach einem der Ansprüche 1 oder 2, **dadurch gekennzeichnet, dass** der Reaktionsbeschleuniger (12) von einem hydrophilen Stoff und/oder Feuchtigkeit gebildet ist.

4. Befestiger nach Anspruch 3, **dadurch gekennzeichnet, dass** der hydrophile Stoff von Baumwolle, Cellulose, einem Faserverbundwerkstoff, einem Salz, einem Mineral, einem Harz, Glycerin oder Propylenglykol gebildet ist.

5. Befestiger nach Anspruch 3, **dadurch gekennzeichnet, dass** die Feuchtigkeit von Wasser oder Isopropanol gebildet ist, welche in flüssiger Form oder in Gelform vorliegt.

6. Befestiger nach einem der Ansprüche 1 bis 5, **dadurch gekennzeichnet, dass** der Grundkörper (2) aus einem diffusionsdichten Material besteht.

7. Befestiger nach einem der Ansprüche 1 bis 6, **dadurch gekennzeichnet, dass** der Deckel (9) von einer Folie oder einem elastisch verformbaren Formteil besteht.

8. Befestiger nach einem der Ansprüche 1 bis 7, **dadurch gekennzeichnet, dass** dieser ein Adapter ist, mittels dessen ein Objekt an einem Gegenstand (4) befestigbar ist.

9. Befestiger nach Anspruch 8, **dadurch gekennzeichnet, dass** der Deckel (9) Bestandteil des Objekts ist.

10. Befestiger nach einem der Ansprüche 3 bis 9, **dadurch gekennzeichnet, dass** in den Reservoirs (11) als Reaktionsbeschleuniger (12) ein Feuchtigkeit enthaltender hydrophiler Stoff vorhanden ist.

11. Befestiger nach einem der Ansprüche 3 bis 9, **dadurch gekennzeichnet, dass** in den Reservoirs (11) als Reaktionsbeschleuniger (12) ein hydrophiler Stoff, der keine Feuchtigkeit enthält, vorhanden ist, wobei dem hydrophilen Stoff nachträglich Feuchtigkeit zugeführt wird.

12. Befestiger nach einem der Ansprüche 1 bis 11, **dadurch gekennzeichnet, dass** die Reservoirs (11) von Ausnehmungen im Grundkörper (2) gebildet sind, welche nur eine Öffnung an der Befestigungsseite (3) aufweisen.

13. Befestiger nach Anspruch 12, **dadurch gekennzeichnet, dass** bei Druckausübung auf den Deckel (9) der über die Bohrungen (10) zur Befestigungsseite (3) geförderte aerobe Klebstoff (8) in Kontakt mit in den Reservoirs (11) gelagertem Reaktionsbeschleuniger (12) kommt.

14. Befestiger nach einem der Ansprüche 1 bis 11, **dadurch gekennzeichnet, dass** die Reservoirs (11) von weiteren, den Grundkörper (2) in axialer Richtung durchsetzenden Bohrungen (14) gebildet sind, wobei diesen Bohrungen (14) wenigstens eine weitere Aufnahme an der Rückseite (6) des Grundkörpers (2) zugeordnet ist, wobei in dieser Aufnahme der Reaktionsbeschleuniger (12) gelagert ist und wobei diese Aufnahme von der Aufnahme für den aeroben Klebstoff (8) abgetrennt ist.

15. Befestiger nach Anspruch 14, **dadurch gekennzeichnet, dass** bei Druckausübung auf den Deckel (9) sowohl der aerobe Klebstoff (8) über die Bohrungen (10) als auch der Reaktionsbeschleuniger (12) über die weiteren Bohrungen (14) zur Befestigungsseite (3) gefördert sind.

16. Befestiger nach einem der Ansprüche 14 oder 15, **dadurch gekennzeichnet, dass** der aerobe Klebstoff (8) und/oder der Reaktionsbeschleuniger (12) jeweils in einer Umhüllung (15) in der jeweiligen Aufnahme gelagert sind und dass mittels eines Durchstoßdorne (17) aufweisenden Werkzeugs (16) durch Führen der Durchstoßdorne (17) durch die Bohrungen (10, 14) die oder jeder Umhüllung (15) aufstoßbar ist.

17. Befestiger nach einem der Ansprüche 1 bis 16, **dadurch gekennzeichnet, dass** die Befestigungsseite (3) mit einem Verschlussmittel (18) lösbar abschließbar ist.

18. Befestiger nach einem der Ansprüche 1 bis 18, **dadurch gekennzeichnet, dass** dieser in einer diffusionsdichten Verpackung lagerbar ist.

19. Befestiger nach einem der Ansprüche 1 bis 13, **dadurch gekennzeichnet, dass** an den äußeren Rand der Befestigungsseite (3) ein Überlaufkanal (20) anschließt, welcher sich über den gesamten Umfang der Befestigungsseite (3) erstreckt.

20. Befestiger nach Anspruch 19, **dadurch gekennzeichnet, dass** der Überlauf kanal (20) an seiner Außenseite von einem Randsegment (7) des Grundkörpers (2) begrenzt ist, welcher über die Befestigungsseite (3) hervorsteht.

21. Befestiger nach Anspruch 20, **dadurch gekennzeichnet, dass** auf die freiliegende Stirnseite des Randsegments (7) ein Klebemittel aufgebracht ist.

22. Befestiger nach Anspruch 21, **dadurch gekennzeichnet, dass** das Klebemittel ein Klebeband (19) ist.
